# EUROPÄISCHE PATENTSCHRIFT

(11) **EP 1 884 687 B1**
(45) Veröffentlichungstag und Bekanntmachung des Hinweises auf die Patenterteilung: **06.05.2009**
(21) Anmeldenummer: 07014316.9
(22) Anmeldetag: 20.07.2007
(51) Int. Cl.: F16H 55/48

(54) **Seilscheibe**
Pulley
Poulie à câble

(30) Priorität: 26.07.2006 DE 102006034566
(43) Veröffentlichungstag der Anmeldung: 06.02.2008
(73) Patentinhaber: Europlast-Nycast GmbH, 40885 Ratingen-Lintorf (DE)
(72) Erfinder: Seelig, Hans-Georg, 40885 Ratingen-Lintorf (DE); Orth, Michael, 45481 Mühlheim an der Ruhr (DE)
(74) Vertreter: Kramer - Barske - Schmidtchen

(56) Entgegenhaltungen:
- DE-A1- 3 329 024
- DE-A1- 3 346 425
- DE-A1- 10 218 757
- DE-A1- 10 225 987
- US-A- 4 012 961
- US-A1- 2005 009 657
- US-A1- 2005 143 208

## Beschreibung

### TECHNISCHES GEBIET

Die vorliegende Erfindung betrifft eine Seilscheibe, die einen um eine axiale Achse drehbaren Tragkörper und ein außenseitig auf dem Tragkörper angeordnetes Seilscheibenfutter umfasst. In dem Seilscheibenfutter ist mindestens eine in Umfangsrichtung der Seilscheibe verlaufende Seilrille mit Rillengrund zur Aufnahme eines oder mehrerer Seile ausgebildet. Das Seilscheibenfutter ist gegenüber dem Tragkörper in Richtung der axialen Achse derart angeordnet ist, dass eine definierte axiale Verschiebbarkeit des Seilscheibenfutters gegenüber dem Tragkörper zugelassen ist.

### HINTERGRUND DER ERFINDUNG

Seilscheiben der hier interessierenden Art kommen insbesondere in Greiferwindenwerkzeugen und anderen hohen Belastungen ausgesetzten Hebezeugen und Fördermitteln zum Einsatz. Vorzugsweise finden sie auch Verwendung in Seiltrieben von Entladekranen für Container, Stück- oder Schüttgut oder ähnlichem. Beispielsweise haben Seilscheiben dieser Bauart einen Seilscheibendurchmesser von 250 mm bis 1600 mm, ein Gesamtgewicht von ungefähr 10 kg bis 1000 kg und dienen zur Umlenkung oder Führung von Stahlseilen mit einem Durchmesser von 20 mm bis 70 mm, insbesondere von 30 mm bis 50 mm.

Seilscheiben, die auch als Seilrollen bezeichnet werden, sind beispielsweise aus der DE 102 18 757 A1 bekannt. Die hierin offenbarte Seilscheibe besteht aus einem Tragkörper und einem auf diesem austauschbar bzw. lösbar angeordneten, mehrteiligen Seilscheibenfutter aus Kunststoff. In dem Seilscheibenfutter ist zumindest eine Seilscheibe zur Aufnahme zumindest eines Seils ausgebildet. Bei einer bevorzugten Ausführungsform dieser Seilscheibe ist das Seilscheibenfutter auf dem Tragkörper in Umfangsrichtung der Seilscheibe einen gewissen Schlupf zulassend bewegbar angeordnet. Dadurch wird der bisherige Schlupf zwischen Seil und Seilscheibenfutter auf die Kontaktfläche zwischen Seilscheibenfutter und dem Tragkörper verlagert. Hierdurch soll die Lebensdauer eines Seils gegenüber der Verwendung von herkömmlichen Seilscheiben um das zwei- bis vierfache verlängert werden. Es sollen zusätzliche, je nach Einsatzgebiet der Seilscheibe erhebliche Kostenreduzierungen erzielt werden. Eine ähnliche Seilscheibe ist in der SU 872 447 gezeigt.

Eine Seilscheibe gemäß der zuvor beschriebenen DE 102 18 757 A1 soll die in der Beschreibungseinleitung der DE 102 18 757 A1 genannten Nachteile bekannter Seilscheiben, wie sie beispielsweise aus der DE 33 29 024 A1 bekannt sind, mindern. Es besteht aber auch bei den aus der DE 102 18 757 A1 bekannten Seilscheiben bzw. Seilrollen weiterhin das Problem, dass während des Betriebs solcher Seilscheiben Bedingungen auftreten können, die einen nach der deutschen Industrienorm DIN 15061, Teil 1 zugelassenen Seilschrägzug von üblicherweise bis zu 4° überschreiten. Hierdurch kommt es zum einen zu zusätzlichem Verschleiß an den Flanken des Rillenprofils in dem Seilscheibenfutter und zum anderen durch das Auflaufen des Seils in einem höheren Flankenbereich des Rillenprofils zu nachteiligen seilverdrehenden Kräften.

Eine Seilscheibe der eingangs genannten Art aus der US-A-4 012 961 bekannt.

### DARSTELLUNG DER ERFINDUNG

Das der Erfindung zugrundeliegende technische Problem besteht darin, eine Seilscheibe der einleitend genannten Art dahingehend zu verbessern, dass beispielsweise bei einem über das übliche hinausgehenden Seilschrägzug die bisher auftretenden Verschleißerscheinungen und die damit verbundenen seilverdrehenden Kräfte zumindest gemindert werden.

Dieses technische Problem wird durch eine Seilscheibe gelöst, die einen um eine axiale Achse drehbaren Tragkörper und ein außenseitig auf dem Tragkörper angeordnetes Seilscheibenfutter umfasst, in dem mindestens eine in Umfangsrichtung verlaufende Seilrille zur Aufnahme eines oder mehrerer Seile ausgebildet ist. Das Seilscheibenfutter ist auf dem Tragkörper in vorbestimmten Grenzen axial verschiebbar angeordnet, so dass sich das Seilscheibenfutter zum Ausgleichen eines übermäßigen Seilschrägzuges auf dem Tragkörper hin- und her bewegen kann. Das Seilscheibenfutter ist reibschlüssig auf dem Tragkörper aufgebracht und bewegt sich ab einem bestimmten Mindestdrehmoment das auf das Seilscheibenfutter oder den Tragkörper einwirkt, gegenüber dem Tragkörper. Der Tragkörper besitzt gemäß der vorliegenden Erfindung an seinem Außenumfang ein Aufnahmeprofil und das Seilscheibenfutter weist an seinem Innenumfang ein mit dem Aufnahmenrofil zusammenpassendes, jedoch im Einblick auf das erfindungsgemäße axiale Spiel abeeändertes Halteprofil auf Das Aufnahmeprofil und das Halteprofil sind also in Umfangsrichtung der Seilscheibe reibschlüssig, senkrecht hierzu aber formlschlüssig unter Ermöglichung des definierten axialen Spiels miteinander verbunden.

Durch diese Ausgestaltung wird die Kombination aus Aufnahme- und Halteprofil dahingehend abgeändert, dass nunmehr nicht nur eine Bewegung des Seilscheibenfutters in Umfangsrichtung gegenüber dem Tragkörper stattfinden kann, sondern auch eine axiale Hin- und Herbewegung des Seilscheibenfutter gegenüber dem Tragkörper zuzulassen ist, um, wie bereits zuvor ausführlich erläutert bei übermäßigen Seilschrägzug, eine Ausgleichsbewegung des Seilscheibenfutters ausdrücklich und gezielt zuzulassen. Entsprechend bilden gemäß dieser beispielhaften Ausführungsform der vorliegenden Erfindung das Aufnahmeprofil und das Halteprofil eine Schiebeverbindung in axialer Richtung, in der eine Bewegung des Seilscheibenfutters in radialer Richtung der Seilscheibe unterbunden ist, aber eine Bewegung in axialer Richtung zugelassen ist. Liegen also Anlage- und Belastungsverhältnisse vor die zu einem über ein Normalmaß hinausgehenden Seilschrägzug führen, kann beispielsweise das Seilscheibenfutter zu Seiten- und Klemmbegrenzungssegmenten und zu dem Halteprofil einen Freiraum aufweisen, der bewusst ein axiales Verschieben des Seilscheibenfutters zulässt.

Durch die erfindungsgemäße Ausgestaltung wird ein üblicherweise durch einen übermäßigen Seilschrägzug verursachter Verschleiß an dem Seilscheibenfutter zumindest verringert. Entsprechend verringern sich bei den erfindungsgemäßen Seilscheiben auch die seilverdrehenden Kräfte und folglich ist die Gefahr, dass sich ein Seil beim Umlaufen um eine erfindungsgemäße Seilscheibe verdreht, gemindert.

Der Erfindung liegt der Gedanke zu Grunde, das Seilscheibenfutter - insbesondere unabhängig von dem verwendeten Werkstoff für das Seilscheibenfutter - mit einem begrenzten definierten axialen Spiel gegenüber dem Tragkörper der Seilscheibe einzubauen. Durch diese Maßnahme kann sich das Seilscheibenfutter bei erhöhtem Seilschrägzug axial verschieben, also hin und her bewegen, und den bei einem Seilschrägzug auf eine Flanke des Rillenprofils in dem Seilscheibenfutter wirkenden Kräften nachgeben, zumindest in einem definierten axialen Bewegungsbereich. Dadurch wird allein auf Grund der geometrischen Verhältnisse zwischen Seil und Seilscheibenfutter der Verschleiß an den Flanken des Rillenprofils in dem Seilscheibenfutter bei übermäßigem Seilschrägzug gegenüber dem einleitend genannten Stand der Technik gemindert.

In einer beispielhaften weiteren Ausführungsform der vorliegenden Erfindung ist das Seilscheibenfutter auf dem Tragkörper lösbar angeordnet. Durch die Lösbarkeit des Seilscheibenfutters ist sowohl einfache Montage als auch eine einfache Demontage der Seilscheibe möglich und insbesondere der Austausch eines verschlissenen Seilscheibenfutters schnell und kostengünstig durchführbar. Außerdem ermöglicht die lösbare Anordnung des Seilscheibenfutters auf dem Tragkörper ein Anpassen bzw. Abändern des Rillenprofils an die Art und Größe des um die Seilscheibe umlaufenden Seils mit relativ geringem Aufwand. Damit ist eine optimale Anpassung des Rillenprofils an den Radius des umlaufenden Seils gemäß DIN 15061 Teil 1 möglich. In Bezug auf die Ausgestaltung der Seilscheibe bei lösbarer Anordnung des Seilscheibenfutters wird auf die eingangs genannte DE 102 18 757 A1 (siehe insb. Absätze [0035]-[0040]) verwiesen.

Eine weitere beispielhafte Ausführungsform der vorliegenden Erfindung sieht vor, dass das Seilscheibenfutter auf dem Tragkörper in Umfangsrichtung der Seilscheibe einen gewissen Schlupf zulassend bewegbar angeordnet ist. Durch diesen Schlupf wird der Verschleiß, der normalerweise zwischen Seil und Seilscheibenfutter auftritt, zumindest verringert, da die Relativbewegung nunmehr zwischen Seilscheibenfutter und Tragkörper stattfindet. Zur Vermeidung unnötiger Wiederholungen wird in Bezug auf die in Umfangsrichtung einen Schlupf aufweisende Ausgestaltung des Seilscheibenfutters und des Tragkörpers auf die DE 102 18 757 A1 (siehe insb. Absätze [0006]-[0017], [0021], [0023] und [0032]) verwiesen.

Bei einer beispielhaften Ausführungsform einer erfindungsgemäßen Seilscheibe hat das Aufnahmeprofil und das Halteprofil im Querschnitt eine Schwalbenschwanzkontur haben. Das axiale Spiel ist bei der Ausgestaltung der Schwalbenschwanzkontur aber berücksichtigt.

In einer weiteren beispielhaften Ausführungsform einer erfindungsgemäßen Seilscheibe setzt sich das Aufnahmeprofil somit im Querschnitt aus mehreren ringförmigen Profilteilen zusammen, zwischen denen das Halteprofil mit dem definierten Spiel in Axialrichtung der Seilscheibe sowie dem Schlupf in Umfangsrichtung zulassend eingeklemmt ist.

Eine weitere beispielhafte Ausführungsform einer erfindungsgemäßen Seilscheibe sieht vor, dass der Bereich des Rillengrundes des Seilscheibenfutters weicher ausgebildet ist als die anderen Bereiche des Seilscheibenfutters. Erstmals wird durch diese "weichere" Ausgestaltung des Bereichs des Rillengrundes sich das Stahlseil leicht in den Rillengrund des Rillenprofils des Seilscheibenfutters einbetten bzw. eindrücken, ohne dabei Schaden zu nehmen. Gemäß der vorliegenden Erfindung wird bei bisher üblich eingesetzten Seilscheiben mit gehärtetem Rillengrund ein Negativabdruck im Rillengrund der Seilscheibe bewusst herbeigeführt. Das härtere Stahlseil nimmt dabei in dem weicheren Rillengrund, der insbesondere in einem Seilscheibenfutter aus Kunststoff ausgeführt sein kann, keinen Schaden und hat erstmals eine größere, Verschleiß mindernde Auflagefläche. Außerdem wird auch der spezifische Flächendruck auf die äußere Seillitze geringer. Durch das im Gebrauch gebildete Oberflächenprofil im Bereich des Rillengrundes des Seilscheibenfutters nimmt das Seil gleichzeitig die Seilscheibe leichter mit. Es kommt, je nach Seilzugkraft und Seilscheibenwiderstand aufgrund dieses Merkmals der Erfindung wesentlich später zu einem Überrutschen des Seils im Rillengrund und damit zu weniger Verschleiß an Seil und Seilscheibe. Die Fläche im Grund des Seilscheibenfutters kann beispielsweise profiliert sein, z.B. rautenförmig. Alternativ ist es auch möglich, den Bereich im Grund des Seilscheibenfutters durch eine entsprechende Fertigungsmodifizierung weicher als der restliche Grundkörper auszubilden. Eine weitere Alternative kann in einer Kombination der genannten Maßnahmen, also der Profilierung und der weicheren Ausbildung bestehen. Durch diese Maßnahmen kann sich das Seil leichter in den Rillengrund eindrücken und einen Oberflächenabdruck hinterlassen, der wiederum zu einem besseren, schlupfärmeren Mitnehmen der Seilscheibe durch das Seil führt.

In einer weiteren beispielhaften Ausgestaltung der vorliegenden Erfindung ist der weichere Bereich des Seilscheibenfutters als definierte profilierte Zone ausgebildet, so dass sich ein Seil in diesem weicheren profilierteren Bereich um ca. 1 bis 2 mm eingraben kann. Durch diese Ausgestaltung werden in besonders herausragender Weise die zuvor beschriebenen Vorteile erzielt.

In einer weiteren beispielhaften Ausführungsform der vorliegenden Erfindung ist unterhalb des Rillengrundes im Seilscheibenfutter eine Verstärkungseinlage im Seilscheibenfutter eingebracht. Mit zunehmender Betriebsdauer einer erfindungsgemäßen Seilscheibe kann es trotz den zuvor erläuterten Ausgestaltungen einer erfindungsgemäßen Seilscheibe, wenn auch später als bei dem eingangs genannten Stand der Technik, zu Verschleiß im Rillengrund des Seilscheibenfutters kommen. Ein dünner werdendes Seil gräbt sich dann im Seilgrund ein und verkleinert den Durchmesser des Rillengrundes in dem Seilscheibenfutter. Hierbei bilden sich oftmals Kanten aus, die bei Seilscheiben und insbesondere bei Stahlseilscheiben ein zusätzliches Verschleiß verursachendes Problem für das Seil darstellen. Durch die Ausgestaltung eines weicheren Rillengrundes runden sich diese Kanten eher ab und bilden auch nach längeren Betriebstandzeiten kein Problem. Sowohl bei dem Werkstoff Stahl als auch bei dem Werkstoff Kunststoff für das Seilscheibenfutter erfolgt aber bei sehr langen Standzeiten einer Seilscheibe eine Durchmesserverringerung der zuvor erläuterten Art. Dies hat zur Folge, dass es zu einer Seilüberlänge kommt, die zusätzlich gekürzt werden muss. Indem nun erstmals gemäß der vorliegenden Erfindung eine verschleißfeste Verstärkungseinlage vorhanden ist, wird insbesondere bei einem Seilscheibenfutter aus Kunststoff die Durchmesserverringerung verzögert und damit das Verschleißen des Rillengrundes hinausgezögert.

In einer weiteren beispielhaften Ausführungsform der vorliegenden Erfindung ist die Verstärkungseinlage in das Seilscheibenfutter eingegossen, das Seilscheibenfutter besteht in diesem Fall insbesondere aus einem Kunststoff wie beispielsweise Polyamid, geöltes Polyamid oder dergleichen. Gemäß einer beispielhaften Ausführungsform der vorliegenden Erfindung besteht die Einlage aus Metall, einer Metalllegierung, Hartkunststoff oder dergleichen. Eine Alternative besteht darin, dass Gewebe und/oder Glasfasern oder dergleichen eingegossen werden.

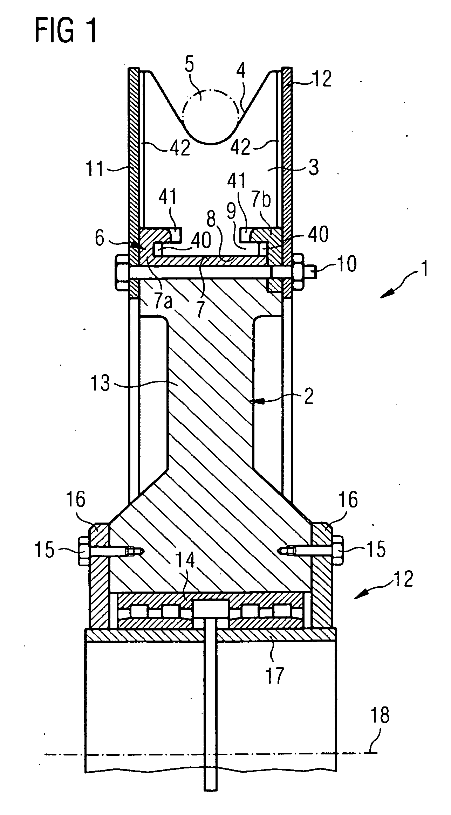

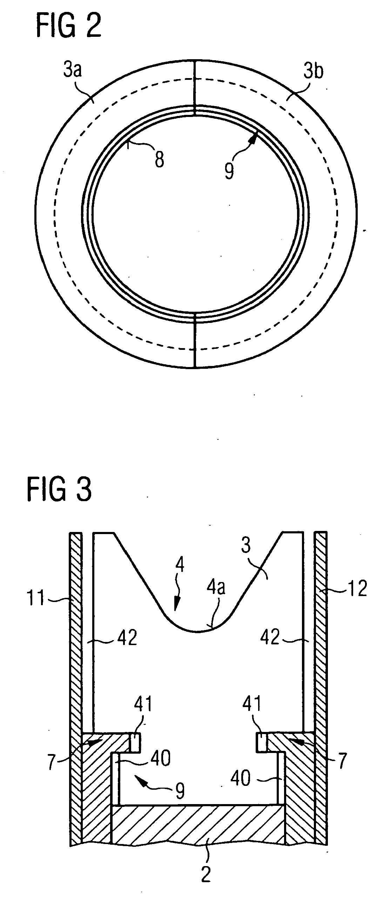

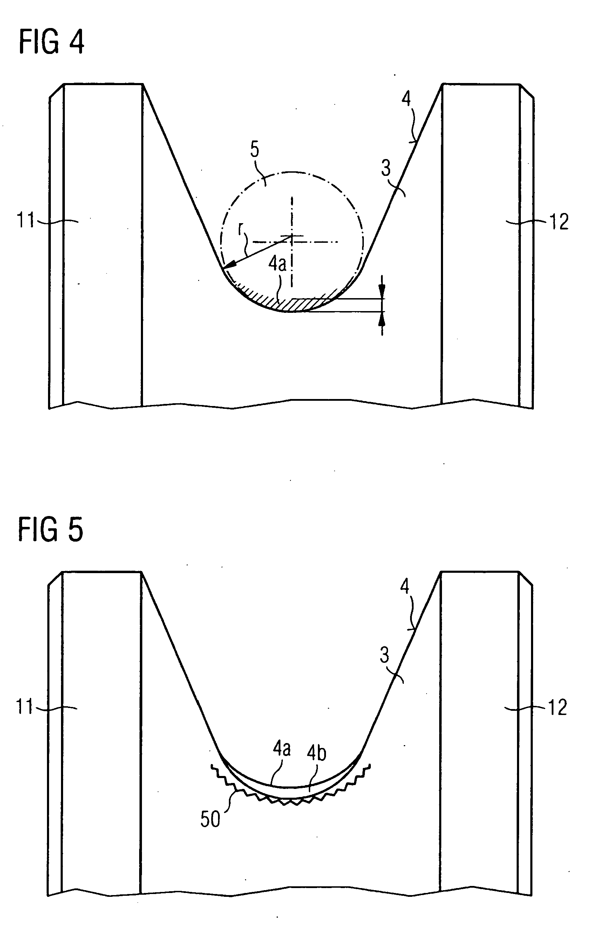

## Patentansprüche

1. Seilscheibe (I) mit:
- einem um eine axiale Achse (18) drehbaren Tragkörper (2),
- einem außenseitig auf dem Tragkörper (2) angeordneten Seilscheibenfutter (3), in dem mindestens eine in Umfangsrichtung verlaufende Seilrille (4) zur Aufnahme eines oder mehrerer Seile (5) ausgebildet ist, wobei das Seilscheibenfutter (3) gegenüber dem Tragkörper (2) in Richtung der axialen Achse derart angeordnet ist, dass eine definierte axiale Verschiebbarkeit des Seilscheibenfutters (3) gegenüber dem Tragkörper (2) zugelassen ist, **dadurch gekennzeichnet, dass**
- das Seilscheibenfutter (3) reibschlüssig auf dem Tragkörper (2) sitzt und sich ab einem bestimmten Mindestdrehmoment, das auf das Seilscheibenfutter (3) oder den Tragkörper (2) einwirkt, gegenüber dem Tragkörper (2) bewegt, und
- der Tragkörper (2) an seinem Außenumfang (6) ein Aufnahmeprofil (7) aufweist und das Seilscheibenfutter (3) an seinem Innenumfang (8) ein mit dem Aufnahmeprofil (7) zusammenpassendes, jedoch das axiale Spiel definierendes Halteprofil (9) aufweist, wobei das Aufnahmeprofil (7) und das Halteprofil (9) in Umfangsrichtung (X) der Seilscheibe (1) reibschlüssig, senkrecht hierzu formschlüssig unter Einbeziehung des definierten axialen Spiels miteinander verbunden sind.

2. Seilscheibe (1) nach Anspruch 1, **dadurch gekennzeichnet, dass** das Seilscheibenfutter (3) auf dem Tragkörper lösbar angeordnet ist.

3. Seilscheibe (1) nach Anspruch 1 oder 2, **dadurch gekennzeichnet, dass** das Seilscheibenfutter (3) auf dem Tragkörper (2) in Umfangsrichtung (X) der Seilscheibe (1) einen gewissen Schlupf zulassend bewegbar angeordnet ist.

4. Seilscheibe nach einem der voranstehenden Ansprüche, **dadurch gekennzeichnet, dass** das Aufnahmeprofil (7) und das Halteprofil (9) eine Schiebeverbindung bilden, in der eine Bewegung des Seilscheibenfutters (3) in radialer Richtung der Seilscheibe (1) unterbunden ist, aber eine Bewegung in axialer Richtung (18) zugelassen ist.

5. Seilscheibe nach Anspruch 4, **dadurch gekennzeichnet, dass** das Aufnahmeprofil (7) und das Halteprofil (9) im Querschnitt eine Schwalbenschwanzkontur haben.

6. Seilscheibe nach einem der voranstehenden Ansprüche, **dadurch gekennzeichnet, dass** sich das Aufnahmeprofil (7) im Querschnitt aus mehreren ringförmigen Profilteilen (7a, 7b) zusammensetzt, zwischen denen das Halteprofil (9) mit dem definierten Spiel in Axialrichtung der Seilscheibe sowie dem Schlupf in Umfangsrichtung zulassend eingeklemmt ist.

7. Seilscheibe nach einem der voranstehenden Ansprüche, **dadurch gekennzeichnet, dass** der Rillengrund des Seilscheibenfutters (3) weicher ausgebildet ist als die anderen Bereiche des Seilscheibenfutters.

8. Seilscheibe nach Anspruch 7, **dadurch gekennzeichnet, dass** der weichere Bereich des Seilscheibenfutters als definierte profilierte Zone ausgebildet ist, so dass sich ein Seil (5) in diesem weicheren, profilierten Bereich um ca. 1 bis 2 mm eingraben kann.

9. Seilscheibe nach Anspruch 7 oder 8, **dadurch gekennzeichnet, dass** unterhalb des Rillengrundes im Seilscheibenfutter (3) eine Verstärkungseinlage (50) im Seilscheibenfutter (3) eingebracht ist.

10. Seilscheibe nach Anspruch 9, **dadurch gekennzeichnet, dass** die Verstärkungseinlage (50) in das Seilscheibenfutter (3) eingegossen ist.

11. Seilscheibe nach Anspruch 9 oder 10, **dadurch gekennzeichnet, dass** die Verstärkungseinlage (50) aus Metall, einer Metalllegierung, Hartkunststoff, einem Gewebe und/oder Glasfasern oder dergleichen besteht.

12. Seilscheibe nach einem der voranstehenden Ansprüche, **dadurch gekennzeichnet, dass** das Seilscheibenfutter (3) aus einem Kunststoff, insbesondere Polyamid, geöltem Polyamid oder dergleichen besteht.

## Claims

1. A rope sheave (1) comprising:
- a supporting body (2) being rotatable around an axial axis (18),
- a rope sheave lining (3) being arranged on the outside of the supporting body (2), wherein at least one groove (4) extending in the circumferential direction is formed for receiving one or plural ropes (5), the rope sheave lining (3) being arranged relatively to the supporting body (2) in the direction of the axial axis such that a defined axial movement of the rope sheave lining (3) relatively to the supporting body (2) is allowed, **characterized in that**
- the rope sheave lining (3) is arranged on the supporting body, engaged by friction, and starts moving relatively to the supporting body (2) when a certain minimum torque that acts on the rope sheave lining (3) or the supporting body (2) is achieved, and
- the supporting body (2) is provided with a receiving profile (7) at its outer circumference (6) and the rope sheave lining (3) is provided with a supporting profile (9) at its inner circumference (8) wherein the supporting profile (9) matches the receiving profile (7) but defines the axial play, wherein the receiving profile (7) and the supporting profile (9) are connected to each other engaged by friction in the circumferential direction (X) of the rope sheave (1), and are positively connected to each other perpendicular to the rope sheave, by taking into account the defined axial play.

2. A rope sheave (1) according to claim 1, **characterized in that** the rope sheave lining (3) is detachably arranged on the supporting body.

3. A rope sheave (1) according to claim 1 or 2, **characterized in that** the rope sheave lining (3) is movably arranged on the supporting body (2) in the circumferential direction (X) of the rope sheave (2), allowing for a certain slip.

4. A rope sheave according to one of the preceding claims, **characterized in that** the receiving profile (7) and the supporting profile (9) form a sliding connection, wherein a movement of the rope sheave lining (3) in the radial direction of the rope sheave (1) is inhibited, but a movement in an axial direction (18) is allowed.

5. A rope sheave according to claim 4, **characterized in that** the receiving profile (7) and the supporting profile (9) have swallowtail-contours in their cross-sections.

6. A rope sheave according to one of the preceding claims, **characterized in that** the receiving profile (7) in cross-section is composed of plural annular profile components (7a, 7b) between which profile components the supporting profile (9) having the defined play in the axial direction of the rope sheave and allowing for the slip in the circumferential direction is clamped.

7. A rope sheave according to one of the preceding claims, **characterized in that** the bottom of the groove of the rope sheave lining (3) is formed softer than the other portions of the rope sheave lining.

8. A rope sheave according to claim 7, **characterized in that** the softer portion of the rope sheave lining is formed as a defined profiled zone, so that a rope (5) can carve about 1 to 2 mm into this softer, profiled portion.

9. A rope sheave according to claim 7 or 8, **characterized in that** a reinforcing insert (50) is inserted into the rope sheave lining (3) beneath the bottom of the groove in the rope sheave lining (3).

10. A rope sheave according to claim 9, **characterized in that** the reinforcing insert (50) is cast integrally with the rope sheave lining (3).

11. A rope sheave according to claims 9 or 10, **characterized in that** the reinforcing insert (50) is made of metal, a metal alloy, hard plastic, a cloth and/or glass fibres or the like.

12. A rope sheave according to one of the preceding claims, **characterized in that** the rope sheave lining (3) is made of a plastic, in particular polyamide, oiled polyamide or the like.

## Revendications

1. Poulie (1) comportant :
- un corps de support (2) apte à tourner autour d'un arbre axial (18),
- une garniture de poulie (3) qui est disposée du côté extérieur sur le corps de support (2) et dans laquelle est ménagée au moins une gorge de câble (4) qui s'étend dans la direction périphérique et qui est destinée à recevoir un ou plusieurs câbles (5), la garniture de poulie (3) étant disposée dans la direction de l'arbre axial par rapport au corps de support (2) afin de conférer à la garniture de poulie (3) une mobilité axiale définie par rapport au corps de support (2), **caractérisée en ce que** :
- la garniture de poulie (3) repose avec friction sur le corps de support (2) et se déplace par rapport au corps de support (2) à partir d'un couple de rotation minimum déterminé qui agit sur la garniture de poulie (3) ou sur le corps de support (2), et
- le corps de support (2) présente sur sa périphérie extérieure (6) un profil de réception (7) et la garniture de poulie (3) présente sur sa périphérie intérieure (8) un profil de retenue (9) correspondant au profil extérieur (7) mais définissant le jeu axial, le profil de réception (7) et le profil de retenue (9) étant reliés l'un à l'autre dans la direction périphérique (X) de la poulie (1) par friction, et perpendiculairement à cette direction par complémentarité de formes en incluant le jeu axial défini.

2. Poulie (1) selon la revendication 1, **caractérisée en ce que** la garniture de poulie (3) est disposée de façon amovible sur le corps de support.

3. Poulie (1) selon la revendication 1 ou 2, **caractérisée en ce que** la garniture de poulie (3) est disposée de façon mobile sur le corps de support (2), en permettant un certain glissement, dans la direction périphérique (X) de la poulie (1).

4. Poulie selon l'une des revendications précédentes, **caractérisée en ce que** le profil de réception (7) et le profil de retenue (9) forment une liaison à glissement dans laquelle la garniture de poulie (3) est empêchée de se déplacer dans une direction radiale de la poulie (1), mais est autorisée à se déplacer dans la direction axiale (18).

5. Poulie selon la revendication 4, **caractérisée en ce que** le profil de réception (7) et le profil de retenue (9) présentent en coupe transversale un contour en queue d'aronde.

6. Poulie selon l'une des revendications précédentes, **caractérisée en ce que** le profil de réception (7) se compose en coupe transversale de plusieurs parties de profil annulaires (7a, 7b) entre lesquelles le profil de retenue (9) est coincé avec le jeu défini dans la direction axiale de la poulie tout en permettant le glissement dans la direction périphérique.

7. Poulie selon l'une des revendications précédentes, **caractérisée en ce que** le fond de la gorge de la garniture de poulie (3) est plus tendre que les autres régions de la garniture de poulie.

8. Poulie selon la revendication 7, **caractérisée en ce que** la région plus tendre de la garniture de poulie est conformée en zone profilée définie de sorte qu'un câble (5) peut s'enfoncer sur environ 1 à 2 mm dans cette région profilée plus tendre.

9. Poulie selon la revendication 7 ou 8, **caractérisée en ce qu'**une couche intérieure de renforcement (50) est incorporée dans la garniture de poulie (3) au-dessous du fond de la gorge ménagée dans la garniture de poulie (3).

10. Poulie selon la revendication 9, **caractérisée en ce qu'**une couche intérieure de renforcement (50) est coulée dans la garniture de poulie (3).

11. Poulie selon la revendication 9 ou 10, **caractérisée en ce que** la couche intérieure de renforcement (50) est en métal, en alliage métallique, en matière plastique dure, en tissu et/ou en fibres de verre ou analogues.

12. Poulie selon l'une des revendications précédentes, **caractérisée en ce que** la garniture de poulie (3) est en matière plastique, notamment en polyamide, en polyamide huilée ou analogues.
